(19) Europäisches Patentamt
European Patent Office
Office européen des brevets

(11) **EP 2 079 625 B1**

(12) **EUROPEAN PATENT SPECIFICATION**

(45) Date of publication and mention
of the grant of the patent:
**25.01.2012 Bulletin 2012/04**

(51) Int Cl.:
***B62D 5/04*** *(2006.01)*     ***B62D 6/00*** *(2006.01)*
***B62D 135/00*** *(2006.01)*

(21) Application number: **07824093.4**

(22) Date of filing: **10.10.2007**

(86) International application number:
**PCT/GB2007/003839**

(87) International publication number:
**WO 2008/044010 (17.04.2008 Gazette 2008/16)**

(54) **ELECTRIC POWER ASSISTED STEERING ASSEMBLY**

ELEKTRISCHE SERVOLENKANORDNUNG

ENSEMBLE DE DIRECTION ASSISTÉE ÉLECTRIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.10.2006 GB 0620143**

(43) Date of publication of application:
**22.07.2009 Bulletin 2009/30**

(73) Proprietor: **TRW Limited
Solihull, West Midlands B90 4AX (GB)**

(72) Inventor: **JUNGHANNS, Birk
Birmingham B13 8JX (GB)**

(74) Representative: **Tranter, Andrew David et al
Barker Brettell LLP
100 Hagley Road
Edgbaston
Birmingham
West Midlands B16 8QQ (GB)**

(56) References cited:
**EP-A- 1 749 730     EP-A- 1 857 349
DE-A1- 10 244 070     US-B1- 6 250 421**

**Description**

This invention relates to improvements in electrical power assisted steering assemblies of the kind in which an electrical motor is adapted to apply an assistance torque to a steering component such as a steering column so as to reduce the driver effort required to control the vehicle. It also relates to a method of controlling a motor in such an assembly.

In a simple electric power assisted steering system a torque sensor is provided which is arranged so that the level of torque applied to a steering column by a driver is measured. From this measurement, a controller calculates the value of a torque demand signal that is indicative of the torque that is to be applied by the motor to the steering column. The motor typically applies a torque of the same sense as that demanded by the driver so as to reduce the effort needed to turn the wheel. The driver applied torque and the assistance torque together act through a pinion gearbox to turn the road wheels.

In a refinement, it is known to include with the assistance torque an amount of torque that counters the tendency of the vehicle to pull to one side due to misalignment of the suspension. If the suspension is misaligned, the forces generated on the road wheels when driving in a straight line can sometimes cause the car to pull to one side. This has to be countered by the driver applying an opposing torque to keep the vehicle in a straight line.

Apparatus of this kind is known from EP1029772A1 in which a small compensation torque of equal and opposite value to the drivers torque demand, as measured by the steering column sensor, is applied by the motor.

We are aware of the teachings of DE 10244070A1 which discloses a steering system which includes a torque sensor and produces a compensation torque signal which has a value based on the output of the sensor. The compensation torque signal can be applied to the steering by an electric motor to compensate for any pull on the steering. It does not compensate for any pull caused by suspension misalignment. We are also aware of US-B-1-6250421 which discloses a similar system which generates a compensation torque to help the vehicle travel straight when there is a pull on the steering due to the road surface or uneven tyre wear. Again this does not compensate for suspension misalignment.

According to a first aspect the invention provides an electric power assisted steering assembly comprising:

a steering mechanism which operatively connects a steering wheel to the road wheels of a vehicle,
a torque sensing means which is adapted to produce an output signal indicative of the torque applied to a portion of the steering mechanism by the driver,
a signal processing means which is adapted to control the motor so as to cause the motor to apply a torque to the steering mechanism to assist the driver; and characterised by further comprising:

a compensation torque generating means which is adapted to combine a torque value representative of the motor applied torque with the output of the torque sensor to produce a compensation torque signal that is to be applied by the motor to the steering mechanism that at least partially compensates for any pull on the steering due to suspension misalignment.

By providing a compensation torque that is derived from a combination of the torque applied by the motor and the driver applied torque (the demand torque) the compensation has been found in some cases to provide an improvement over the prior art. In particular, where a particularly aggressive assistance curve is provided for the system, the combined measurement allows a value to be calculated over a wider range of driving conditions without being distorted by the presence of any low levels of assistance torque.

The motor may apply a torque that is formed from a combination of the compensation torque and an assistance torque. The assistance torque may be derived from the column torque applied by the driver, its primary function being to make the steering lighter to turn. The assistance torque will typically increase with driver applied torque, and be of equal sign so that the motor works with the driver.

It is preferred, however, that the assistance torque is also a function of other vehicle parameters, such as vehicle speed. The apparatus may therefore include means for providing a measurement of vehicle speed to the processing means. This may comprise a speed sensor.

The apparatus may also be adapted to produce a compensation torque that is also a function of vehicle speed. For example, the compensation value may be zero or substantially zero, up to a first vehicle speed and then be higher at speeds greater than the first vehicle speed.

The apparatus may further be adapted to calculate the compensation torque when the vehicle operating conditions meet certain conditions. If the conditions are not met, a new value will not be calculated and the existing value will continue to be used. This is satisfactory since in most cases changes in suspension geometry happen only very slowly as components wear. The conditions may include one or more of the following:

- Vehicle speed exceeds a second value, e.g. 60km/h. This may be determined from a vehicle speed sensor.

- Vehicle is travelling in a straight line. This may be determined from a measurement of vehicle heading or the steering angle over a period of time.

- That the torque applied by the driver is above a first threshold and below a second threshold level. These may, for example, be set at 0.5Nm and 3Nm respectively (although clearly this will depend on the application).

- That the conditions have otherwise been meet for a period of time exceeding a preset value, e.g. 10 seconds or 1 minute or more.

- That the pressure of one or more of the tyres of the vehicle is within a range of values that indicates correct tyre inflation. This may, for example, be a range of 20 to 40 psi (1.43bar to 2.85bar) and most preferably 21psi (1.5 bar) to 35psi (2.5bar). Again this will depend on the vehicle and the tyre.

- That the rate of acceleration (or deceleration) of the vehicle is below a preset level.

- That the electric steering system is working within its normal operating conditions by checking all necessary subcomponents to be within agreed operation conditions and hence being protected against failures (i.e. motor/ECU temperature, maximum current, memory checksum, torque sensor, etc)

- That steering angle applied by the driver is below a first threshold level. This may, for example, be set at 10deg or less (although clearly this will depend on the application).

- That steering velocity applied by the driver is below a first threshold level.

- That lateral acceleration of the vehicle is below a first threshold level. This may, for example, be set at 3m/s$^2$ or less (although clearly this will depend on the application).

If all, or some (depending on availability of signals and type of application) of the above conditions are met, for example, the vehicle must be in a straight line at relatively high speed with good tyre pressures. This will typically correspond to running on a motorway or freeway where the camber of the road is typically low and will not cause the car to pull.

Because a combination of motor applied torque and driver-applied torque is used, the conditions may be considered met even if the motor is assisting. This is an improvement over the prior art in that it allows a wider range of conditions to be used. This is important if an aggressive assistance function is used, by which we mean that the motor applies a high amount of assistance at relatively low driver applied torques and close to the straight ahead position.

Specifically, the apparatus may be adapted to produce a non zero assistance torque value for a range of steering angles and applied torques that falls within the range over which the conditions for determining a new compensation torque value are met. Typically, this may comprise an angle up to say 10 degrees and a driver applied torque up to say 2Nm. The apparatus may be adapted to update the compensation torque value whenever the conditions for so doing are met.

The apparatus may derive the compensation torque from the combination of assistance torque and driver applied torque using a recursive filter, which may be expressed by an equation of the form:

$$PDC(n) = \frac{1}{STEP\_CONSTANT} * [Column\_Torque + Assist\_Torque\_Demand] + \frac{(STEP\_CONSTANT - 1)}{STEP\_CONSTANT} * PDC(n-1)$$

or

$$PDC(n) = \frac{1}{STEP\_CONSTANT} * [Column\_Torque + Motor\_Torque\_Demand + PDC(n-1)] + \frac{(STEP\_CONSTANT - 1)}{STEP\_CONSTANT} * PDC(n-1)$$

Where PDC(n) is the compensation torque at time n, Step constant is a constant, column torque is the driver applied torque and motor_torque_demand is the assistance torque derived from the column torque.

The constant may have a relatively large value such as 10,000 and the PDC value may be calculated at a relatively high frequency of say 500 Hz.

Alternatively, the apparatus may derive the compensation torque using an equation of the form:

$$PDC(n) = \frac{1}{STEP\_CONSTANT} * \left[Column\_Torque + Compensator\_Torque\_Demand\right] + PDC(n-1)$$

This later equation is preferred since it requires less logical elements to implement in a processing device. It is notable that the Motor torque is omitted from this calculation. This is an acceptable assumption for a range of operating conditions in which the total motor applied torque can be approximated as equal to the compensation torque.

According to a second aspect the invention provides a motor control strategy for an electric power assisted steering system of a vehicle of the kind in which an electric motor is used to apply a torque to the steering system to assist the driver, the method comprising measuring the torque applied to a portion of the steering system by a driver, determining a motor torque applied by the motor to the steering assembly to assist the driver, and calculating a compensation torque value from both the motor applied torque and the driver applied torque, the compensation torque acting to at least partially cancel any pull on the steering due to suspension misalignment.

The motor applied torque may comprise an assistance torque and a compensation torque. The method may approximate this as equal to the compensation torque over a range of operating conditions.

There will now be described, by way of example only, one embodiment of the present invention with reference to and as illustrated in the accompanying drawings of which:

Figure 1 is a schematic diagram of an electric power assisted steering system in accordance with the present invention;

Figure 2 is a schematic view of a control strategy for the motor of Figure 1 in which a combined assistance and compensation torque is generated to apply to the motor;

Figure 3 illustrates in more detailed schematic form the processing of the signals to determine the compensation torque (indicated by the term PDC Torque Demand).

Figure 4 is a block diagram of a first choice of logic used within the compensation torque calculation block of Figure 3; and

Figure 5 is a block diagram of a second choice of logic used within the compensation torque calculation block of Figure 3

Figure 6 is an illustration of the effect of applying the compensation in a simulation of a steering system fitted to a vehicle.

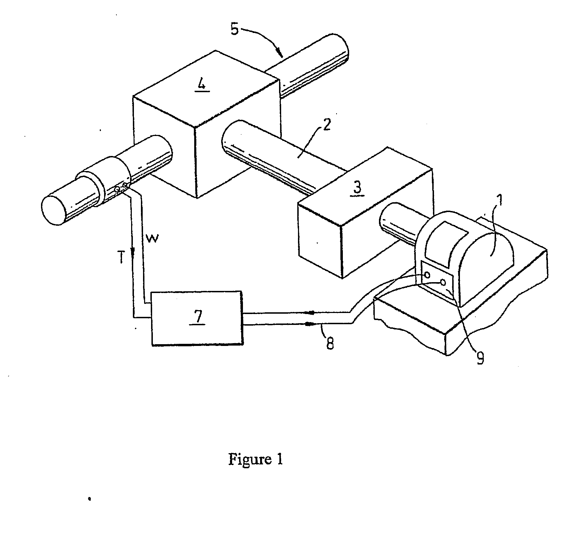

An electric power assisted steering assembly is illustrated in Figure 1 of the accompanying drawings. The apparatus comprises an electric motor 1 which acts upon a drive shaft 2 through an (optional) gearbox of the rack and pinion type. The drive shaft terminates with a worm gear 4 that cooperates with a wheel provided on a portion of a steering column 5 or a shaft operatively connected to the steering column. The apparatus is such that any force applied to the steering column through the gearbox would be felt by the driver, requiring the driver to apply a constant small corrective torque to hold a straight line. As will become apparent, the invention of this embodiment works to at least partially compensate for this pull.

The steering column carries a torque sensor 6 that is adapted to measure the torque carried by the steering column. This torque is produced by the driver turning the steering wheel, either to turn a corner or to counter pull of the vehicle to one side. The output signal T from this sensor is fed to a signal processing means in the form of a digital signal processor 7.

An angular velocity sensor 8 is also provided on the steering column. In some arrangements, this could be combined with the torque sensor 6 as a single device. This produces an output signal v indicative of the angular velocity of the steering wheel (i.e. how quick the driver turns the wheel).

A vehicle speed sensor 9 is also provided which measures the road speed of the vehicle V. This is also fed to the signal processing means 7.

A vehicle lateral acceleration measurement device (not shown) that otherwise is not part of the steering apparatus feeds lateral acceleration information to the signal processing means.

Finally, a tyre pressure monitor (not shown) that otherwise is not part of the steering apparatus feeds tyre pressure information to the signal processing means.

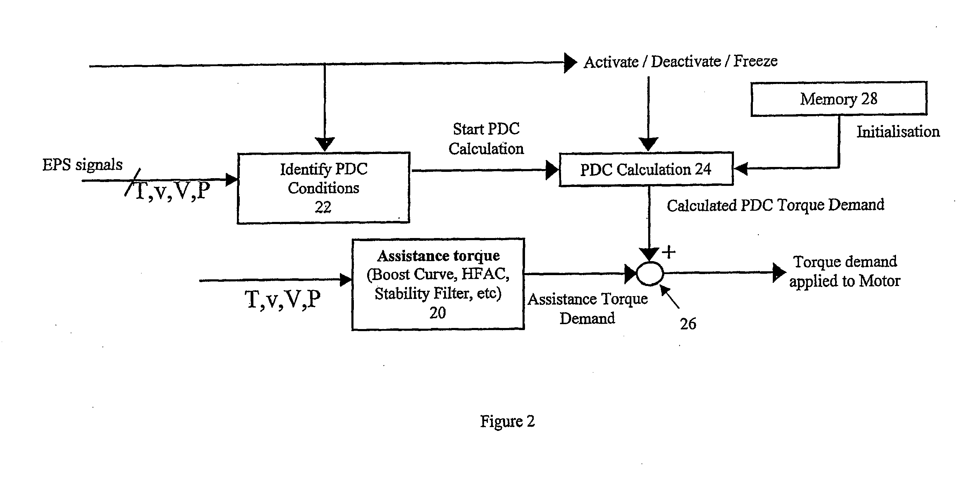

The signal processing means acts on the measure signals in a manner outlined by the schematic of Figure 2 of the accompanying drawings.

In block 20, the torque signal T and angular velocity v and vehicle speed signal V are fed to the controller which produces an assistance torque value. This is a value that determines an amount of assistance that is to be applied by the motor purely to assist the driver in turning the wheel. The skilled man will readily understand how to derive such an assistance torque signal.

The signal processor also examines in block 22 the input signals to determine if a set of predefined conditions about the vehicles operation are met. More detail of these conditions will be given hereinafter, but for the sake of an explanation of Figure 2 it is sufficient here to simply appreciate that there are conditions. If they are met, the signal processing means in block 24 determines a compensation torque value that is chosen to compensate for any pull of the vehicle to one side. This value is then combined in block 26 with the assistance torque value to produce a combined value that is used to drive the motor.

Also shown is a memory (block 28) in which an initial compensation value is stored for use on start up. This may be the last value calculated prior to a system shut down, or a factory default setting for use on first use or after correction of the suspension to remove the pull has been made.

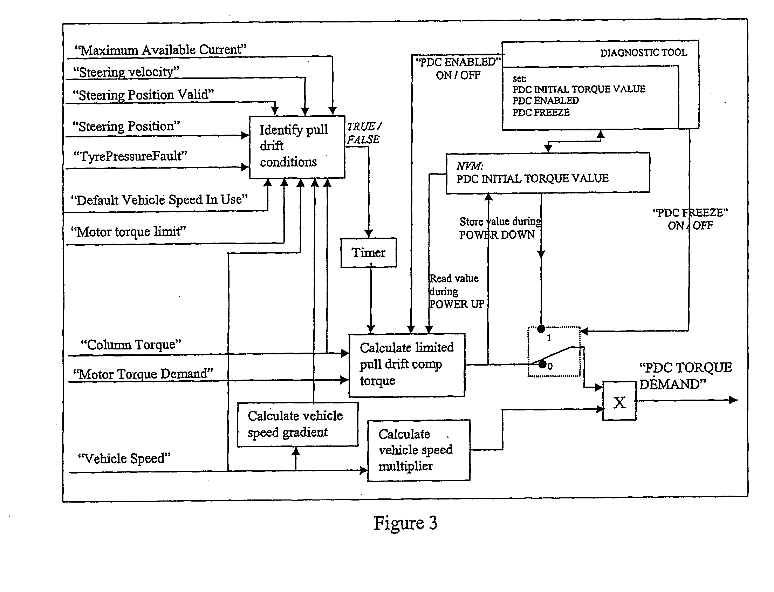

Figure 3 shows the whole processing strategy applied by the signal processing means in more fine detail. In particular, the different blocks of Figure 2 are shown in more functional detail. The different conditions are shown on the top left feeding into block 22. A timer is then used to ensure the conditions are met for the required length of time. The data stored in the memory is shown at the top right as block 28

As stated, the vehicle and its steering must meet a range of conditions before a compensation torque value can be determined. In the embodiment shown the conditions are chosen to correspond with the vehicle running at high speed on a motorway. They therefore include a vehicle speed measurement which must indicate the vehicle is travelling at 60 km/h or more (or some other defined speed dependent upon national speed limits of the country in which the vehicle is to be driven), and that the driver applied torque and applied angle are below a threshold level indicating that the vehicle is travelling in a straight line and not round a corner.

Having satisfied the conditions, the compensation torque is calculated by the processor. The compensation calculation performed in block 24 can be carried out in a number of ways, but in this example it is performed using a recursive filter. This makes a number of calculations over time and uses past results to smooth out any changes in value over time.

A number of recursive filters can be applied but the following two are preferred:

(1) Filter 1:

$$PDC(n) = \frac{1}{STEP\_CONSTANT} * [Column\_Torque + Motor\_Torque\_Demand + PDC(n-1)] + \frac{(STEP\_CONSTANT-1)}{STEP\_CONSTANT} * PDC(n-1)$$

Where PDC(n) is the compensation torque value at time n;

STEP CONSTANT is a constant which determines the rate at which the PDC value can change. This is typically relatively high, say 400000 at a sampling rate of 500Hz

Motor Torque Demand is the assistance torque based on the driver applied torque.

The combination of Column Torque and Motor Torque Demand represent the torque at the pinion of the gearbox.

(2) Filter 2:

$$PDC(n) = \frac{1}{STEP\_CONSTANT} * [Column\_Torque + Compensator\_Torque\_Demand] + PDC(n-1)$$

$$PDC\ (n) = \frac{1}{STEP\ \_\ CONSTANT} * \left[ Column\ \_\ Torque\ +\ Motor\ \_\ Torque\ \_\ Demand\ \right] + PDC\ (n - 1)$$

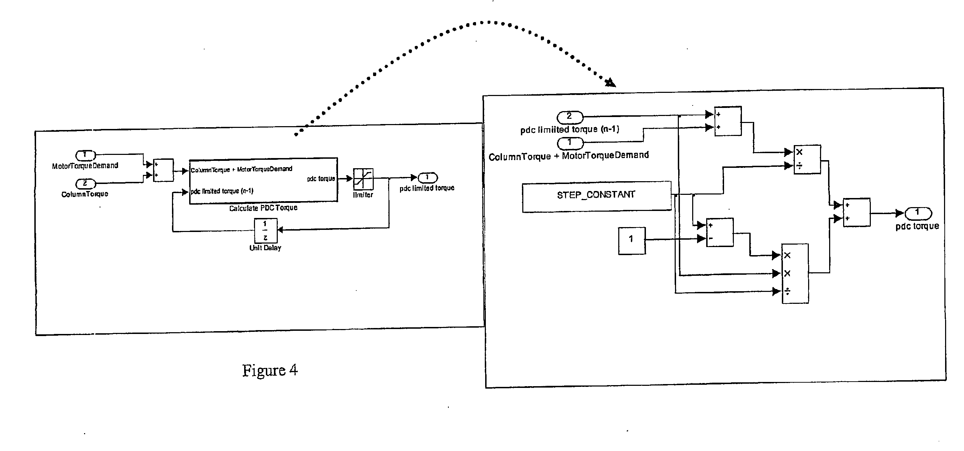

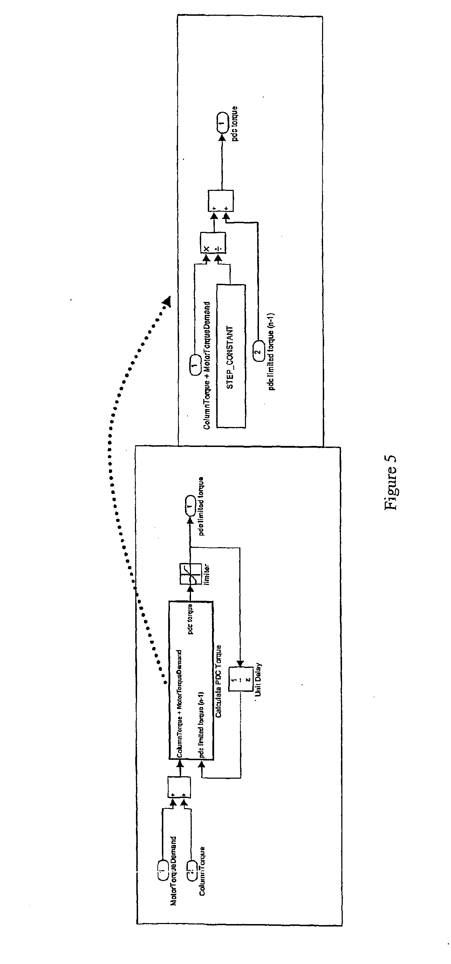

The first and second equations can be implemented in the processor in the form of the logic circuits shown in Figures 4 and 5 of the accompanying drawings. Note that the second equation may in some instances be preferred, as it requires less logical components.

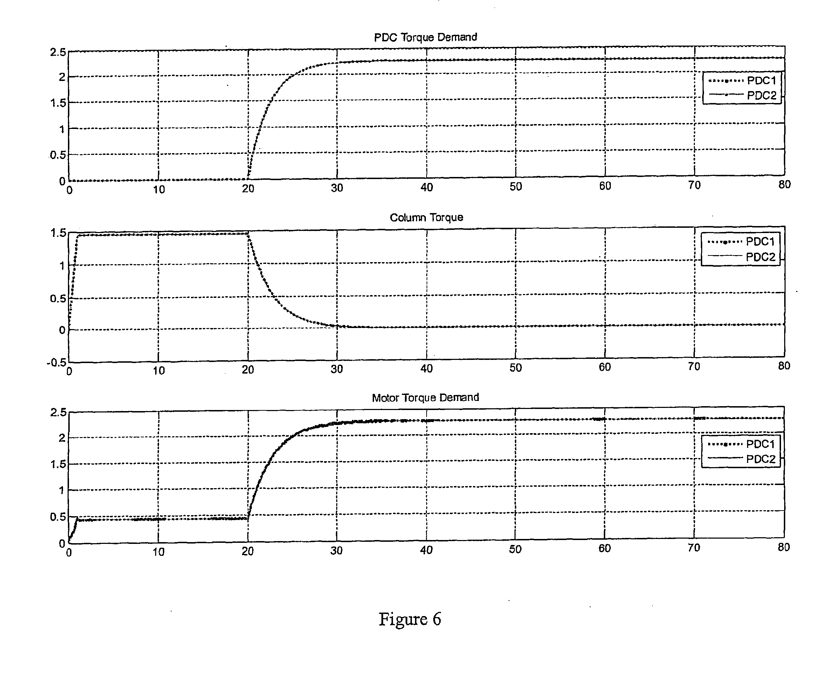

Due to a high value of step constant Equation 1 and 2 are effectively providing the same amount compensation. This can be seen in the results of Figure 6 in which a comparison of the behaviour of an apparatus that produces a compensation torque based on equations 1 and 2 is made over time for a simulated change in pull torque applied to the steering.

Figure 6 shows the results of simulation in which it is assumed that there is no friction present in the steering mechanism. An offset of 150N is given as rack force which results in a Column Torque of approx. 0.95Nm. After 8 seconds the conditions are met which enable the function, after additional 2 seconds the TIMER is expired which then start the PDC algorithms. The calculated PDC TORQUE DEMAND is added to the Motor Torque Demand, this reduces the Column Torque and in turn reduces the speed in which the PDC algorithm adopts. In this simulation the STEP CONSTANT are set to 1000 which means that after approx 5000 computation steps the full offset has been compensated.

Trace 6(a) shows the PDC Torque Demand increasing until saturated. Trace 6(b) shows the Column Torque reducing from the initial offset to 0Nm. Trace 6(c) shows the effective Motor Torque Demand (including the PDC Torque Demand) over time.

**Claims**

1. An electric power assisted steering assembly comprising:

   a steering mechanism (2, 3, 4, 5) which operatively connects a steering wheel to the road wheels of a vehicle,
   a torque sensing means (6) which is adapted to produce an output signal indicative of the torque applied to a portion of the steering mechanism by the driver,
   a signal processing means (7) which is adapted to control a motor (1) so as to cause the motor (1) to apply a torque to the steering mechanism to assist the driver; and **characterised by** further comprising:

   a compensation torque generating means (24) which is adapted to combine a torque value representative of the motor applied torque with the output of the torque sensor to produce a compensation torque signal that is to be applied by the motor to the steering mechanism that at least partially compensates for any pull on the steering due to suspension misalignment.

2. An electric power assisted steering assembly according to claim 1 in which the motor (1) is adapted to apply a torque that is formed from a combination of the compensation torque and an assistance torque and in which the assistance torque is derived from the column torque applied by the driver.

3. An electric power assisted steering assembly according to claim 1 or claim 2 which is further adapted to produce a compensation torque that is also a function of vehicle speed.

4. An electric power assisted steering assembly according to any preceding claim which is further adapted to calculate the compensation torque signal value when the vehicle operating conditions meet certain conditions and in the event that the conditions are not met, to not calculate a new value.

5. An electric power assisted steering assembly according to claim 4 in which the conditions that are to be met include the vehicle speed exceeding a set value, e.g. 60km/h.

6. An electric power assisted steering assembly according to claim 4 in which the conditions that are to be met include the vehicle travelling in a straight line as determined from a measurement of vehicle heading or the steering angle over a period of time.

7. An electric power assisted steering assembly according to claim 4 in which the conditions that are to be met include the torque applied by the driver being above a first and below a second threshold level.

8. An electric power assisted steering assembly according to claim 4 in which the conditions that are to be met include a period of time exceeding a preset value.

9. An electric power assisted steering assembly according to claim 4 in which the conditions that are to be met include the pressure of one or more of the tyres of the vehicle being within a range of values that indicates correct tyre inflation.

10. An electric power assisted steering assembly according to claim 4 in which the conditions that are to be met include the lateral acceleration of the vehicle being below a first threshold level.

11. An electric power assisted steering assembly according to claim 4 in which the conditions that are to be met include the rate of acceleration (or deceleration) of the vehicle being below a preset level.

12. An electric power assisted steering assembly according to any one of claims 4 or 5 which is adapted to produce a non zero assistance torque value for a range of steering angles and applied torques that falls within the range over which the conditions for determining a new compensation torque value are met.

13. An electric power assisted steering assembly according to any preceding claim which is adapted to derive the compensation torque from the combination of assistance torque and driver applied torque using a recursive filter.

14. An electric power assisted steering assembly according to claim 13 in which the filter is expressed by an equation of the form:

$$PDC(n) = \frac{1}{STEP\_CONSTANT} * [Column\_Torque + Motor\_Torque\_Demand + PDC(n-1)] + \frac{(STEP\_CONSTANT - 1)}{STEP\_CONSTANT} * PDC(n-1)$$

where PDC(n) is the compensation torque at time n, Step constant is a constant, column torque is the driver applied torque and motor_torque_demand is the assistance torque derived from the column torque.

15. An electric power assisted steering assembly according to claim 13 in which the compensation torque is expressed by the equation of the form:

$$PDC(n) = \frac{1}{STEP\_CONSTANT} * [Column\_Torque + Compensator\_Torque\_Demand] + PDC(n-1)$$

16. A motor control strategy for an electric power assisted steering system of a vehicle of the kind in which an electric motor (1) is used to apply a torque to the steering system to assist the driver, the method comprising measuring the torque applied to a portion of the steering system by a driver, determining a motor torque applied by the motor (1) to the steering assembly to assist the driver, and **characterised by** calculating a compensation torque value from both the motor applied torque and the driver applied torque, the compensation torque acting to at least partially cancel any pull on the steering due to suspension misalignment.

17. A motor control strategy according to claim 16 in which the motor applied torque comprises an assistance torque and a compensation torque.

**Patentansprüche**

1. Elektrische Servolenkungsanordnung, mit:

   - einem Lenkmechanismus (2, 3, 4, 5), der ein Lenkrad betriebsfähig mit den Laufrädern eines Fahrzeugs verbindet,
   - einer Drehmomentsensiereinrichtung (6), die ein Ausgangssignal zu erzeugen vermag, welches das von dem Fahrer auf einen Teil des Lenkmechanismus aufgebrachte Drehmoment angibt,

- einer Signalverarbeitungseinrichtung (7), die einen Motor (1) zu steuern vermag, um den Motor (1) dazu zu veranlassen, ein Drehmoment zur Unterstützung des Fahrers auf den Lenkmechanismus aufzubringen, und ferner **gekennzeichnet durch**:

- eine Kompensationsmomenterzeugungseinrichtung (24), die einen Drehmomentwert, der repräsentativ für das vom Motor aufgebrachte Drehmoment ist, mit dem Ausgang des Drehmomentsensors zu kombinieren vermag, um ein Kompensationsmomentsignal zu erzeugen, das vom Motor auf den Lenkmechanismus aufzubringen ist und das jedwedes aufgrund eines Fahrwerksspurfehlers auf die Lenkung wirkendes Ziehen zumindest teilweise kompensiert.

2. Elektrische Servolenkungsanordnung nach Anspruch 1, bei der der Motor (1) ein Drehmoment aufzubringen vermag, das gebildet ist aus einer Kombination des Kompensationsmoments und eines Unterstützungsmoments, und bei der das Unterstützungsmoment aus dem vom Fahrer aufgebrachten Lenksäulenmoment abgeleitet ist.

3. Elektrische Servolenkungsanordnung nach Anspruch 1 oder Anspruch 2, die ferner ein Kompensationsmoment zu erzeugen vermag, welches auch eine Funktion der Fahrzeuggeschwindigkeit ist.

4. Elektrische Servolenkungsanordnung nach einem der vorhergehenden Ansprüche, die ferner den Kompensationsmomentsignalwert zu berechnen vermag, wenn die Fahrzeugbetriebsbedingungen bestimmten Bedingungen entsprechen, und für den Fall, dass die Bedingungen nicht erreicht werden, keinen neuen Wert berechnet.

5. Elektrische Servolenkungsanordnung nach Anspruch 4, bei der die zu erreichenden Bedingungen umfassen, dass die Fahrzeuggeschwindigkeit einen Vorgabewert übersteigt, z.B. 60 km/h.

6. Elektrische Servolenkungsanordnung nach Anspruch 4, bei der die zu erreichenden Bedingungen umfassen, dass das Fahrzeug sich in einer geraden Linie fortbewegt, bestimmt aus einer Messung des Fahrzeugkurses oder des Lenkwinkels über eine Zeitspanne.

7. Elektrische Servolenkungsanordnung nach Anspruch 4, bei der die zu erreichenden Bedingungen umfassen, dass das vom Fahrer aufgebrachte Drehmoment sich oberhalb eines ersten und unterhalb eines zweiten Schwellenwertes befindet.

8. Elektrische Servolenkungsanordnung nach Anspruch 4, bei der die zu erreichenden Bedingungen umfassen, dass eine Zeitspanne einen voreingestellten Wert übersteigt.

9. Elektrische Servolenkungsanordnung nach Anspruch 4, bei der die zu erreichenden Bedingungen umfassen, dass der Druck eines oder mehrerer der Reifen des Fahrzeugs sich innerhalb eines Wertebereich befindet, der einen korrekten Reifendruck angibt.

10. Elektrische Servolenkungsanordnung nach Anspruch 4, bei der die zu erreichenden Bedingungen umfassen, dass die Querbeschleunigung des Fahrzeugs sich unterhalb eines ersten Schwellenwertes befindet.

11. Elektrische Servolenkungsanordnung nach Anspruch 4, bei der die zu erreichenden Bedingungen umfassen, dass das Maß der Beschleunigung (oder Verzögerung) des Fahrzeugs sich unterhalb eines voreingestellten Wertes befindet.

12. Elektrische Servolenkungsanordnung nach einem der Ansprüche 4 oder 5, die dazu eingerichtet ist, einen Unterstützungsmomentwert ungleich Null für einen Bereich von Lenkwinkeln und aufgebrachten Drehmomenten zu erzeugen, der in den Bereich fällt, über den die Bedingungen zum Ermitteln eines neuen Kompensationsmomentwertes gegeben sind.

13. Elektrische Servolenkungsanordnung nach einem der vorhergehenden Ansprüche, die das Kompensationsmoment aus der Kombination des Unterstützungsmoments und des vom Fahrer aufgebrachten Drehmoments mittels eines rekursiven Filters abzuleiten vermag.

14. Elektrische Servolenkungsanordnung nach Anspruch 13, bei der der Filter ausgedrückt ist durch eine Gleichung der Form:

**EP 2 079 625 B1**

$$PDC(n) = \frac{1}{STEP\_CONSTANT} * [Column\_Torque + Motor\_Torque\_Demand + PDC(n-1)] + \frac{(STEP\_CONSTANT-1)}{STEP\_CONSTANT} * PDC(n-1)$$

wobei PDC(n) das Kompensationsmoment zur Zeit n ist, Step Constant eine Konstante ist, Column Torque das vom Fahrer aufgebrachte Drehmoment ist und Motor Torque Demand das aus dem Lenksäulenmoment abgeleitete Unterstützungsmoment ist.

15. Elektrische Servolenkungsanordnung nach Anspruch 13, bei der das Kompensationsmoment ausgedrückt ist durch die Gleichung der Form:

$$PDC(n) = \frac{1}{STEP\_CONSTANT} * [Column\_Torque + Compensator\_Torque\_Demand] + PDC(n-1)$$

16. Motorsteuerstrategie für ein elektrisches Servolenkungssystem eines Fahrzeugs der Art, bei der ein Elektromotor (1) dazu verwendet wird, zur Unterstützung des Fahrers ein Drehmoment auf das Lenkungssystem aufzubringen, wobei das Verfahren umfasst ein Messen des von einem Fahrer auf einen Teil des Lenkungssystems aufgebrachten Drehmoments, ein Ermitteln eines von dem Motor (1) auf die Lenkungsanordnung zum Unterstützen des Fahrers aufgebrachten Motordrehmoments, **gekennzeichnet durch** Berechnen eines Kompensationsmomentwertes aus sowohl dem vom Motor aufgebrachten Drehmoment und dem vom Fahrer aufgebrachten Drehmoment, wobei das Kompensationsmoment dahingehend wirkt, jedwedes auf die Lenkung aufgrund eines Fahrwerksspurfehlers wirkendes Ziehen zumindest teilweise auszugleichen.

17. Motorsteuerstrategie nach Anspruch 16, bei der das vom Motor aufgebrachte Drehmoment ein Unterstützungsmoment und ein Kompensationsmoment umfasst.

**Revendications**

1. Ensemble de direction assistée électrique comprenant :

un mécanisme de direction (2, 3, 4, 5) qui raccorde de manière opérationnelle un volant aux roues d'un véhicule, des moyens de détection de couple (6) qui sont adaptés pour produire un signal de sortie indiquant le couple appliqué à une partie du mécanisme de direction par le conducteur, des moyens de traitement de signal (7) qui sont adaptés pour commander un moteur (1) afin d'amener le moteur (1) à appliquer un couple sur le mécanisme de direction pour assister le conducteur ; et **caractérisé en ce qu'**il comprend en outre:

des moyens de génération de couple de compensation (24) qui sont adaptés pour combiner une valeur de couple représentative du couple appliqué par le moteur avec la sortie du capteur de couple pour produire un signal de couple de compensation qui doit être appliqué par le moteur sur le mécanisme de direction qui compense au moins partiellement toute traction sur la direction due à un défaut d'alignement de suspension.

2. Ensemble de direction assistée électrique selon la revendication 1, dans lequel le moteur (1) est adapté pour appliquer un couple qui est formé à partir d'une combinaison du couple de compensation et d'un couple d'assistance, et dans lequel le couple d'assistance est dérivé du couple de colonne appliqué par le conducteur.

3. Ensemble de direction assistée électrique selon la revendication 1 ou la revendication 2, qui est en outre adapté pour produire un couple de compensation qui dépend également de la vitesse du véhicule.

4. Ensemble de direction assistée électrique selon l'une quelconque des revendications précédentes, qui est en outre adapté pour calculer la valeur de signal de couple de compensation lorsque les conditions de fonctionnement du véhicule satisfont certaines conditions et dans le cas dans lequel les conditions ne sont pas satisfaites, pour ne pas calculer une nouvelle valeur.

**5.** Ensemble de direction assistée électrique selon la revendication 4, dans lequel les conditions qui doivent être satisfaites comprennent la vitesse du véhicule dépassant une valeur déterminée, par exemple, 60 km/h.

**6.** Ensemble de direction assistée électrique selon la revendication 4, dans lequel les conditions qui doivent être satisfaites comprennent le véhicule qui se déplace en ligne droite, comme déterminé à partir d'une mesure de tête de véhicule ou de l'angle de braquage sur une période de temps.

**7.** Ensemble de direction assistée électrique selon la revendication 4, dans lequel les conditions qui doivent être satisfaites comprennent le couple appliqué par le conducteur qui est supérieur à un premier et inférieur à un deuxième niveau de seuil.

**8.** Ensemble de direction assistée électrique selon la revendication 4, dans lequel les conditions qui doivent être satisfaites comprennent une période de temps dépassant une valeur prédéterminée.

**9.** Ensemble de direction assistée électrique selon la revendication 4, dans lequel les conditions qui doivent être satisfaites comprennent la pression d'un ou de plusieurs pneus du véhicule qui est dans une plage de valeurs qui indique le gonflage correct du pneu.

**10.** Ensemble de direction assistée électrique selon la revendication 4, dans lequel les conditions qui doivent être satisfaites comprennent l'accélération latérale du véhicule qui est inférieure à un premier niveau de seuil.

**11.** Ensemble de direction assistée électrique selon la revendication 4, dans lequel les conditions qui doivent être satisfaites comprennent le taux d'accélération (ou de ralentissement) du véhicule qui est inférieur à un niveau prédéterminé.

**12.** Ensemble de direction assistée électrique selon l'une quelconque des revendications 4 ou 5, qui est adapté pour produire une valeur de couple d'assistance non nulle pour une plage d'angles de braquage et des couples appliqués, qui se trouve dans la plage au-dessus de laquelle les conditions pour déterminer une nouvelle valeur de couple de compensation sont satisfaites.

**13.** Ensemble de direction assistée électrique selon l'une quelconque des revendications précédentes, qui est adapté pour dériver le couple de compensation de la combinaison du couple d'assistance et du couple appliqué par le conducteur en utilisant un filtre récursif.

**14.** Ensemble de direction assistée électrique selon la revendication 13, dans lequel le filtre est exprimé par une équation de la formé :

$$PDC(n) = \frac{1}{PALIER\_CONSTANT} \times [Colonne\_Couple + Moteur\_Couple\_Demande + PDC\ (n-1)] + \frac{(PALIER\_CONSTANT\ -1)}{PALIER\_CONSTANT} \times PDC(n-1)$$

où PDC(n) est le couple de compensation à l'instant n, le palier constant est une constante, le couple de colonne est le couple appliqué par le conducteur et la demande de couple de moteur est le couple d'assistance dérivé du couple de colonne.

**15.** Ensemble de direction assistée électrique selon la revendication 13, dans lequel le couple de compensation est exprimé par l'équation de la formé :

$$PDC(n) = \frac{1}{PALIER\_CONSTANT} \times [Colonne\_Couple + Compensateur\_Couple\_Demande] + PDC\ (n-1)]$$

**16.** Stratégie de commande de moteur pour un système de direction assistée électrique d'un véhicule du type dans lequel un moteur électrique (1) est utilisé pour appliquer un couple sur le système de direction pour assister le conducteur, le procédé comprenant les étapes consistant à mesurer le couple appliqué sur une partie du système de direction par un conducteur, déterminer un couple de moteur appliqué par le moteur (1) sur l'ensemble de direction pour assister le conducteur, et **caractérisée par** l'étape consistant à calculer une valeur de couple de compensation à la fois à partir du couple appliqué par le moteur et du couple appliqué par le conducteur, le couple de compensation agissant pour annuler au moins partiellement toute traction sur la direction due au défaut d'alignement de suspension.

17. Stratégie de commande de moteur selon la revendication 16, dans laquelle le couple appliqué par le moteur comprend un couple d'assistance et un couple de compensation.

Figure 1

Figure 2

EP 2 079 625 B1

"Maximum Available Current"

"Steering velocity"

"Steering Position Valid"

"Steering Position"

"TyrePressureFault"

"Default Vehicle Speed In Use"

"Motor torque limit"

"Column Torque"

"Motor Torque Demand"

"Vehicle Speed"

Identify pull drift conditions

*TRUE / FALSE*

Timer

DIAGNOSTIC TOOL

"PDC ENABLED" ON / OFF

set:
PDC INITIAL TORQUE VALUE
PDC ENABLED
PDC FREEZE

*NVM:* PDC INITIAL TORQUE VALUE

Store value during POWER DOWN

Read value during POWER UP

"PDC FREEZE" ON / OFF

Calculate limited pull drift comp torque

1

0

Calculate vehicle speed gradient

Calculate vehicle speed multiplier

X

"PDC TORQUE DEMAND"

Figure 3

Figure 4

MotorTorqueDemand

ColumnTorque

ColumnTorque + MotorTorqueDemand

pdc limited torque (n-1)

Calculate PDC Torque

pdc torque

limiter

pdc limited torque

1
z

Unit Delay

ColumnTorque + MotorTorqueDemand

STEP_CONSTANT

pdc limited torque (n-1)

pdc torque

Figure 5

Figure 6

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1029772 A1
- DE 10244070 A1
- US 16250421 B